# DEMANDE DE BREVET EUROPEEN

(11) **EP 0 885 764 A1**
(43) Date de publication de la demande: **23.12.1998**
(21) Numéro de dépôt: 98401243.5
(22) Date de dépôt: 26.05.1998
(51) Int. Cl.: B60K 15/04

(54) **Bouchon de réservoir de carburant pour véhicule.**

(30) Priorité: 17.06.1997 FR 9707471; 04.02.1998 FR 9801279
(71) Demandeur: Antivols Simplex, 21850 Saint Apollinaire (FR)
(72) Inventeur: Hembert, Marc, 60850 La Landelle (FR); Beaufremez, Pascal, 60240 Chaumont en Vexin (FR); Jouffroy, Michel, 21100 Fauverney (FR)
(74) Mandataire: Peuscet, Jacques

(57) **Abrégé**

Le bouchon (1) de tubulure de réservoir de carburant pour véhicule comprend des moyens de verrouillage (33) du bouchon en position d'obturation sur la tubulure, propres à coopérer avec des moyens de blocage complémentaires prévus sur la tubulure pour empêcher le retrait du bouchon, les moyens de verrouillage (33) étant commandés par une clé (22). Il comprend un dispositif de blocage (11, 34) de la clé (22) sur le bouchon (1) propre à empêcher le retrait de la clé du bouchon lorsque ce dernier est séparé de la tubulure, ce dispositif de blocage étant propre à s'effacer pour libérer la clé au moins lorsque le bouchon (1) est en position d'obturation sur la tubulure (2).

## Description

L'invention est relative à un bouchon de réservoir de carburant pour véhicule, du genre de ceux qui comportent un barillet de serrure ayant un stator fixe dans le bouchon et un rotor actionnable à l'aide d'une clé, ledit rotor étant solidaire en rotation de moyens de verrouillage du bouchon en position d'obturation sur la tubulure, propres à coopérer avec des moyens de blocage complémentaires prévus sur la tubulure pour empêcher le retrait du bouchon, la clé pouvant être la clé de contact du véhicule.

Il peut arriver qu'un conducteur distrait, après remplissage du réservoir de carburant, sépare la clé de contact du bouchon et oublie de remettre ce bouchon en place sur le réservoir. Le conducteur peut ainsi rouler avec le véhicule alors que le réservoir de carburant est ouvert, ce qui est dangereux et polluant pour l'environnement.

L'invention a pour but, surtout, de fournir un bouchon de tubulure de réservoir de carburant pour véhicule qui permette d'éviter un tel inconvénient, et qui empêche que l'on puisse faire rouler le véhicule avec le réservoir de carburant ouvert. L'invention a, en outre, pour but de fournir une solution à ce problème qui soit simple à mettre en oeuvre et aussi économique que possible.

Selon l'invention, un bouchon de tubulure de réservoir de carburant pour véhicule, du genre défini précédemment, est caractérisé par le fait qu'il comprend un dispositif de blocage de la clé dans le rotor lorsque le bouchon est désolidarisé de la tubulure, ce dispositif de blocage étant propre à s'effacer pour libérer la clé lorsque le bouchon est en position d'obturation sur la tubulure.

Généralement le stator du barillet est lié en rotation à une platine de bouchon, le rotor étant lié en rotation à un organe de maintien pouvant tourner relativement à la platine lorsque le rotor est libéré en rotation vis à vis du stator, la clé ne pouvant être introduite dans le rotor, ou retirée de ce dernier, que pour une position angulaire rotor/stator déterminée correspondant à une position angulaire organe de maintien/platine qui assure le verrouillage du bouchon sur la tubulure par coopération de l'organe de maintien avec un élément conjugué de la tubulure ; avantageusement, le dispositif de blocage de la clé comprend alors des moyens de blocage en rotation de l'organe de maintien relativement à la platine dans une position angulaire, qui empêche le retrait de la clé du rotor du barillet, ces moyens de blocage entrant en action lorsque le bouchon est retiré de la tubulure et étant mis hors d'action par coopération avec une partie de la tubulure lorsque le bouchon est remis en place sur celle-ci.

Les moyens de blocage peuvent comporter au moins un organe d'enclenchement soumis à une sollicitation élastique et lié en rotation à l'un des deux éléments constitués par la platine et l'organe de maintien, cet organe d'enclenchement étant effacé et mis hors d'action lorsque le bouchon est en prise avec la tubulure, et passant en position active qui bloque en rotation les deux éléments l'un par rapport à l'autre lorsque le bouchon est séparé de la tubulure.

Selon une réalisation avantageuse, l'organe d'enclenchement est lié en rotation à la platine et comporte une patte s'étendant sensiblement radialement vers l'extérieur qui est déplaçable dans une direction sensiblement parallèle à l'axe du bouchon, la patte étant propre à coopérer avec le bord de l'embouchure de la tubulure pour repousser ladite patte à l'encontre de la sollicitation élastique et mettre l'organe d'enclenchement hors d'action lorsque le bouchon est en prise sur la tubulure. De préférence, l'un de l'ensemble constitué par l'organe d'enclenchement et l'organe de maintien comporte au moins un doigt propre à s'engager, sous l'action de la sollicitation élastique, dans un logement prévu sur l'autre dudit ensemble, pour assurer le blocage des deux éléments lorsque le bouchon est séparé de la tubulure.

Avantageusement, deux organes d'enclenchement diamétralement opposés sont prévus.

Dans un premier mode de réalisation, l'organe d'enclenchement est un cliquet monté mobile en translation parallèlement à l'axe du bouchon et sollicité par des moyens élastiques. De préférence, le cliquet comporte au moins un doigt propre à s'engager, sous l'action des moyens élastiques, dans un logement prévu sur l'organe de maintien, et une patte s'étendant radialement vers l'extérieur pour coopérer avec le bord de l'embouchure de la tubulure.

L'organe de maintien peut être constitué par un manchon faisant saillie à l'intérieur de la tubulure et constituant un support baïonnette, lequel manchon comporte au moins une baïonnette ou un ergot en saillie radiale propre à venir en butée, suivant une direction parallèle à l'axe du bouchon, au-dessous d'un rebord conjugué solidaire de la tubulure lorsque cet organe de maintien occupe, relativement à la platine, la position de verrouillage. Le logement propre à recevoir le doigt du cliquet est avantageusement prévu dans la partie supérieure de l'ergot, au voisinage de la paroi du manchon constituant le support baïonnette.

Le cliquet, lié en rotation à la platine, est prévu de préférence au droit d'un appendice de centrage du bouchon, solidaire de la face inférieure de la platine, cet appendice comportant une extension vers l'intérieur de la tubulure propre à constituer une butée suivant la direction périphérique pour l'ergot correspondant du support baïonnette.

Selon une autre possibilité, la fixation de l'organe de maintien sur la tubulure, au lieu d'être assurée par un système à baïonnettes avec au moins un ergot prévu sur l'organe de maintien, pourrait être assurée par vissage avec filets conjugués sur l'organe de maintien et sur la tubulure.

Dans un autre mode de réalisation, l'organe d'enclenchement comporte une patte s'étendant sensiblement radialement vers l'extérieur à partir d'une rondelle en appui sur la face inférieure de la platine, ladite patte étant élastiquement déformable à partir d'une position inclinée par rapport au plan de la rondelle pour se déplacer dans une direction sensiblement parallèle à l'axe du bouchon.

Selon une autre caractéristique, l'organe de maintien comporte au moins un doigt propre à s'engager, sous l'action de la force élastique de rappel de la patte, dans un logement prévu sur ladite patte de blocage.

Dans ce cas, l'organe de maintien peut être constitué par un manchon faisant saillie à l'intérieur de la tubulure et constituant un support de baïonnettes, lequel manchon comporte au moins une baïonnette ou ergot en saillie radiale propre à venir en butée, suivant une direction parallèle à l'axe du bouchon, au-dessous d'un rebord conjugué solidaire de la tubulure lorsque cet organe de maintien occupe, relativement à la platine, la position de verrouillage, et le doigt propre à être reçu dans le logement de la patte est prévu sur le bord supérieur du manchon constituant le support de baïonnette.

Avantageusement, la patte de la rondelle, liée en rotation à la platine, est angulairement espacée d'un appendice de centrage du bouchon, solidaire de la face inférieure de la platine, cet appendice comportant une extension vers l'intérieur de la tubulure propre à constituer une butée suivant la direction périphérique pour l'ergot correspondant du support de baïonnettes.

Selon encore une autre caractéristique, la rondelle est emmanchée à force sur un manchon solidaire de la face inférieure de la platine et contenant le barillet de serrure, des moyens de liaison en rotation complémentaires étant formés dans la rondelle et sur le manchon.

Pour mieux faire comprendre l'objet de l'invention, on va en décrire maintenant, à titre d'exemples purement illustratifs et non limitatifs, deux modes de réalisation représentés sur le dessin annexé.

Sur ce dessin :
- la figure 1 est une vue oblique de dessous, en perspective éclatée, de la platine, de l'organe de maintien du type à baïonnettes, et des cliquets d'un bouchon de réservoir selon un premier mode de réalisation de l'invention ;
- la figure 2 est une vue oblique de dessus, en perspective éclatée, des pièces de la figure 1;
- la figure 3 est une coupe axiale verticale à plus grande échelle, selon la ligne III-III de la figure 4, du bouchon séparé de la tubulure ;
- la figure 4 est une vue de gauche par rapport à la figure 3 du bouchon , avec partie en coupe et partie en extérieur ;
- la figure 5 est une coupe axiale verticale selon la ligne V-V de la figure 6, du bouchon en place sur la tubulure, dans la position verrouillée ;
- la figure 6 est une vue de gauche par rapport à la figure 5 du bouchon et de la tubulure, avec partie en coupe et partie en extérieur ;
- la figure 7 est une coupe axiale verticale selon la ligne VII-VII de la figure 8 du bouchon sur la tubulure en position déverrouillée, le support de baïonnettes étant tourné de 90°, relativement à la platine, par rapport à la position de la figure 5 ;
- la figure 8 est une vue de gauche, partie en coupe et partie en extérieur, par rapport à la figure 7 ;
- la figure 9 est une vue en perspective de dessous d'un bouchon de réservoir selon un deuxième mode de réalisation de l'invention ;
- la figure 10 est une vue en coupe axiale selon la ligne X-X de la figure 11, du deuxième mode de réalisation ;
- la figure 11 est une vue en coupe axiale selon la ligne XI-XI de la figure 10, lors de la mise en place du bouchon sur la tubulure de réservoir ;
- la figure 12 est une vue de dessus de la rondelle de blocage de clé du deuxième mode de réalisation ; et
- la figure 13 représente, en perspective, un embout de liaison du bouchon selon les figures 9 à 12, vu à partir de son extrémité orientée vers la clé.

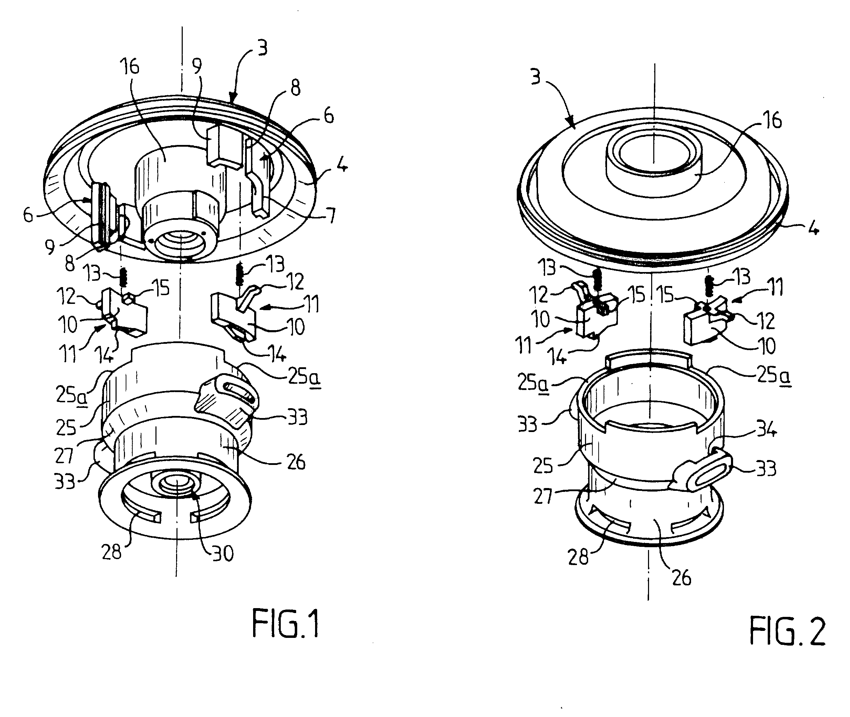

En se référant aux figures 1 à 8, on va décrire un premier mode de réalisation selon l'invention, comportant un bouchon 1 de tubulure 2 de réservoir de carburant pour véhicule.

Ce bouchon 1 comprend une platine 3 qui coiffe l'embouchure de la tubulure et vient comprimer, par un rebord tronconique 4, un joint d'étanchéité 5 en appui contre une collerette extérieure 2b de la tubulure 2. Deux appendices de centrage 6, diamétralement opposés, solidaires de la platine 3 sont prévus sous sa face inférieure, en saillie vers l'intérieur de la tubulure. Lorsque le bouchon est en place sur la tubulure, ces appendices 6 coopèrent avec des moyens conjugués prévus sur la tubulure pour déterminer une position angulaire relative de la platine 3 fixe vis-à-vis de la tubulure 2. Chaque appendice 6 comporte à une extrémité une extension 7 en direction de l'intérieur de la tubulure, cette extension constituant une butée dont il sera question plus loin.

Comme visible sur la figure 1, l'appendice 6 comprend une paroi latérale constituée par une portion de paroi cylindrique d'axe confondu avec celui de la platine 3. Cette paroi comporte, de préférence à mi-largeur, une fente 8 ouverte à son extrémité inférieure, parallèle à l'axe géométrique du bouchon. A chaque extrémité de la paroi latérale de l'appendice 6 est prévu un retour radial vers l'intérieur, tel que 9, pour limiter un logement destiné à recevoir une plaquette 10 faisant partie d'un cliquet 11. Ce cliquet comporte une patte 12 en extension radiale vers l'extérieur, propre à coulisser dans la fente 8. Des moyens élastiques constitués par un ressort de compression 13 sont prévus pour être comprimés entre le bord supérieur de la plaquette 10 et la face inférieure de la platine 3. Le ressort 13 a donc tendance à écarter le cliquet 11 de la platine 3 en le repoussant vers l'intérieur de la tubulure. Le bord inférieur de la plaquette 10 comporte un doigt 14 en saillie vers le bas. La face interne de la plaquette 10 comporte un ergot 15 en saillie radialement vers l'intérieur, dans le prolongement de la patte 12.

La platine 3 comporte au centre un manchon cylindrique 16 d'axe perpendiculaire au plan moyen de la platine 3, servant de logement à un barillet 17 retenu par un jonc j ancré dans la paroi intérieure du manchon. Le manchon 16 s'étend de part et d'autre du plan de la platine 3. Le barillet comprend un stator 18 bloqué en rotation dans le manchon 16. Le stator 18 est donc lié en rotation à la platine 3. Un rotor 19, schématiquement représenté, est monté dans le stator, avec possibilité de rotation relativement au stator lorsque des paillettes usuelles (non visibles) sont effacées par une clé autorisée 22.

La platine 3 est recouverte par un capuchon 20 encliqueté sur le rebord 4. Le cas échéant, le capuchon 20 est monté libre de tourner relativement à la platine 3. Ce capuchon 20 comporte une ouverture centrale 21 donnant accès à une fente (non visible) du rotor 19 pour l'introduction d'une clé de commande constituée par la clé de contact 22 du véhicule, très schématiquement représentée. Cette clé 22 comporte des dents et des creux (non représentés) propres à coopérer avec les paillettes (non visibles) du rotor 19. Une jupe cylindrique 20a fait saillie du capuchon 20 vers l'intérieur et autour de l'ouverture centrale 21, pour venir s'emboîter sur la portion de manchon 16 de la platine 3 qui se trouve en vis-à-vis.

Le bouchon 1 comporte en outre un organe de maintien 23 constitué par un support 24 de baïonnettes, disposé coaxialement à la platine 3. Le support 24 comprend un manchon supérieur 25 cylindrique de révolution entourant coaxialement le manchon 16 de la platine 3 et un manchon inférieur 26, de plus faible diamètre, relié au manchon supérieur par une zone de transition tronconique 27. Des fenêtres rectangulaires 28 sont prévues en partie basse de la paroi cylindrique du manchon 26. Un voile 29, dont le plan moyen est orthogonal à l'axe de l'organe 23, est prévu dans le manchon inférieur 26, sensiblement à mi-longueur.

Ce voile 29 comporte dans sa partie centrale une sorte de moyeu 30 comportant un passage central dans lequel est bloquée en rotation une pièce 31 de liaison avec le rotor 19. Le blocage en rotation de la pièce 31 est assuré, par exemple, par quatre dents 32 du moyeu régulièrement réparties suivant la circonférence, engagées dans des rainures correspondantes de la pièce 31. Cette pièce traverse une ouverture prévue dans le fond 16a du manchon 16 de la platine 3. La pièce 31 est libre en rotation relativement au fond 16a et à la platine 3. La partie 31a de la pièce 31 située à l'intérieur du manchon 16 détermine un logement dont le bord tourné vers le rotor 19 comporte des becs en saillie radialement vers l'intérieur pour s'encliqueter sur un épaulement d'un prolongement 19a du rotor. Ce prolongement 19a comporte une extrémité tronconique elle-même prolongée par une queue 19b à section transversale cruciforme bloquée en rotation dans des rainures correspondantes de la pièce 31 qui définit un embout de liaison.

Il apparaît ainsi que le support 24 de baïonnettes est lié en rotation, par la pièce 31, au rotor 19.

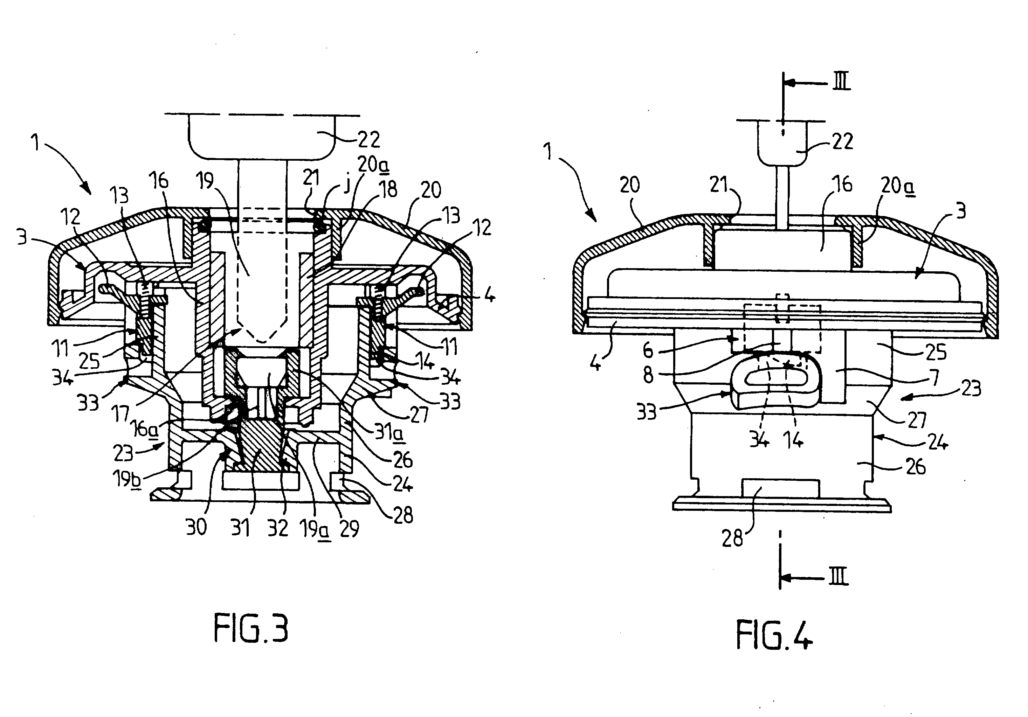

Le support 24 comporte à l'extérieur, dans la zone inférieure de son manchon 25 de plus grand diamètre, deux baïonnettes ou ergots 33 diamétralement opposés pour assurer le verrouillage du bouchon sur la tubulure. Comme visible sur la figure 4, chaque ergot 33 a une forme tubulaire à section transversale aplatie sensiblement ovale, dont le grand axe est orthogonal à l'axe géométrique du support 24 de baïonnettes.

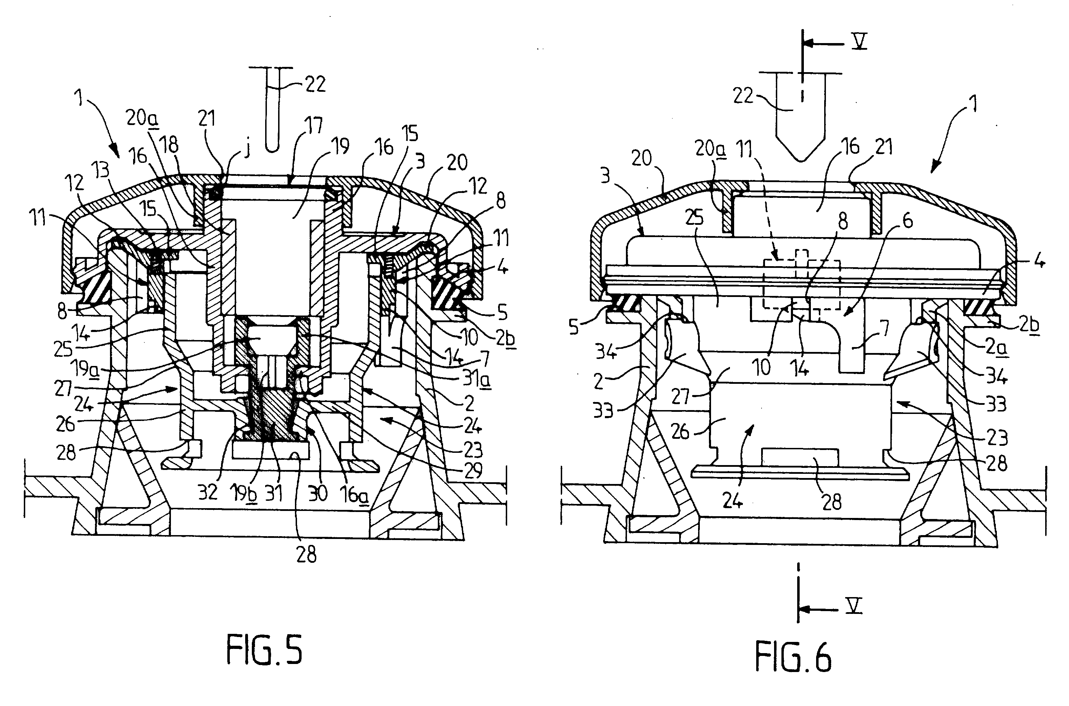

Lorsque le bouchon 1 est verrouillé sur la tubulure 2, comme illustré sur les figures 5 et 6, les ergots 33 se trouvent à 90° des appendices de centrage 6 de la platine 3 et sont retenus par une partie de la tubulure 2 constituée par un rebord 2a (Fig. 6).

Pour le démontage du bouchon 1, par traction selon la direction de son axe géométrique, le support 24 de baïonnettes est tourné de 90° par rapport à la position des figures 5 et 6, de sorte que les ergots 33 viennent en appui contre les butées respectives 7, au-dessous des appendices de centrage 6 de la platine 3. Comme visible sur la figure 4, les ergots 33 sont compris entre les limites latérales des appendices 6 de sorte que ces ergots 33 peuvent être extraits par translation axiale à travers les créneaux ou échancrures, prévus dans le rebord 2a, pour le passage des appendices de centrage 6.

La paroi supérieure de chaque ergot 33 comporte un logement 34, contre la paroi du manchon 25. L'ensemble est agencé pour que le logement 34 vienne au droit de la fente 8, dans son prolongement, lorsque le support baïonnette 24 occupe, relativement à la platine 3, la position de démontage du bouchon illustrée sur les figures 3 et 4. Le logement 34 se trouve alors dans le prolongement du doigt 14 du cliquet 11 associé.

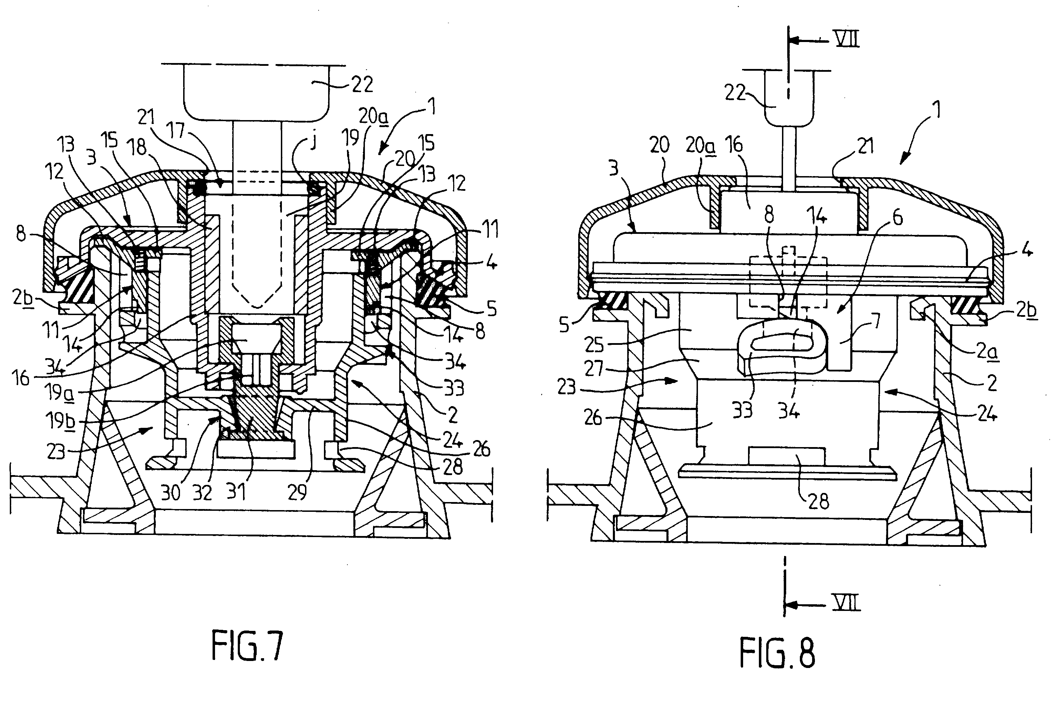

Lorsque le ressort 13 du cliquet est comprimé du fait que la patte 12 est repoussée par le bord de la tubulure contre la platine 3, comme illustré sur la figure 7, le doigt 14 n'est pas engagé dans le logement 34, et le support 24 reste libre de tourner, relativement à la platine 3, avec le rotor 19.

Par contre, lorsque le bouchon 1 est séparé de la tubulure, la patte 12 de chaque cliquet est poussée par le ressort 13 vers le bas et le doigt 14 inférieur du cliquet entre dans le logement 34, comme visible sur la figure 3.

Le bord supérieur du manchon 25 comporte deux échancrures diamétralement opposées 25a (fig. 1 et fig. 2) d'une étendue angulaire légèrement supérieure à 90°, dont le bord retient l'ergot 15 du cliquet 11 lorsque le ressort 13 est détendu, comme illustré sur la Figure 3.

Le passage de la position de verrouillage du support 24 de baïonnettes, illustrée sur les figures 5 et 6, à la position permettant le démontage du bouchon, illustré sur les figures 3 et 4, et inversement, est obtenu à l'aide de la clé de commande 22 qui permet de faire tourner le rotor 19 et avec lui le support 24 relativement à la platine 3.

De manière classique, le rotor 19 comporte des paillettes (non représentées) qui bloquent en rotation le rotor 19 relativement au stator 18 dans leur position angulaire relative permettant l'introduction et l'extraction de la clé 22. Cette position angulaire relative rotor 19/stator 18 correspond à la position angulaire de verrouillage du support baïonnette 24, pour laquelle les ergots 33 sont décalés de 90° par rapport aux appendices de centrage 6 de la platine 3.

Ceci étant, le fonctionnement du bouchon 1 de tubulure de réservoir de carburant est le suivant.

Lorsque le bouchon 1 est verrouillé sur la tubulure 2 (figures 5 et 6), la position angulaire du support 24 est telle que les ergots de verrouillage 33 sont tournés de 90° par rapport aux appendices de centrage 6 de la platine 3. La position angulaire relative correspondante du rotor 19 et du stator 18 permet la sortie des paillettes du rotor 19 dans le stator 18. Ceci entraîne le blocage en rotation du rotor 19 relativement au stator 18, et donc du support 24 relativement à la platine 3. Cette dernière étant bloquée en rotation sur la tubulure 2, par ses appendices 6 logés dans des échancrures du rebord 2a, et les ergots 33 étant retenus en translation axiale par le rebord 2a de la tubulure, le bouchon 1 est bloqué sur la tubulure.

La sortie des paillettes du rotor 19 permet d'introduire ou d'extraire la clé 22 dans le rotor. Les cliquets 11 sont remontés par coopération de leurs pattes 12 avec le bord supérieur de la tubulure 2, et les doigts 14 sont hors des logements 34.

L'introduction de la clé 22 dans le rotor permet de faire rentrer les paillettes et de libérer en rotation le rotor 19 relativement au stator 18. Par action sur la clé, on peut faire tourner le rotor 19 et avec lui le support 24 de 90° par rapport à la platine 3 de sorte que les ergots de verrouillage 33 viennent en appui contre leur butée respective 7 au-dessous de l'appendice de centrage 6 respectif, chaque logement 34 venant au droit d'une fente 8 de coulissement d'un cliquet 11.

Du fait que le rotor 19 a tourné relativement au stator 18, les paillettes ne peuvent plus sortir du rotor et immobilisent la clé 22 dans ce dernier.

Les ergots 33 n'étant plus retenus par le rebord 2a, le bouchon 1 peut être ôté de la tubulure par traction sur la clé 22, ou sur le bouchon 1 lui-même. La patte 12 de chaque cliquet n'étant plus en appui contre le bord de la tubulure, le cliquet 11 est repoussé par le ressort 13 qui se détend, et le doigt 14 de chaque cliquet entre dans le logement 34 de l'ergot 33 correspondant.

Le support 24 de baïonnettes et la platine 3 deviennent alors solidaires en rotation. La clé 22 ne peut plus faire tourner le support 24 pour le ramener dans la position angulaire qui permet l'extraction de la clé. Cette dernière reste donc bloquée par les paillettes du rotor 19 sur le bouchon 1 séparé de la tubulure.

Ce n'est qu'en replaçant le bouchon 1 sur la tubulure, et en le poussant contre le bord de la tubulure, que l'utilisateur peut libérer le support 24 en rotation, relativement à la platine 3, en repoussant les pattes 12 des cliquets 11 par le bord de la tubulure. Les doigts 14 sont ainsi dégagés des logements 34. L'utilisateur peut alors faire tourner le rotor 19 et le support 24 de 90° à l'aide de la clé 22, ce qui assure le verrouillage du bouchon sur la tubulure puisque les ergots 33 reviennent sous le rebord 2a. Ce n'est qu'à ce moment que l'utilisateur peut retirer la clé 22.

Le bouchon de l'invention permet donc d'éviter que le véhicule ne circule avec la tubulure de réservoir ouverte puisque, pour extraire cette clé 22 du rotor 19, il faut que le bouchon 1 soit en position verrouillée sur la tubulure.

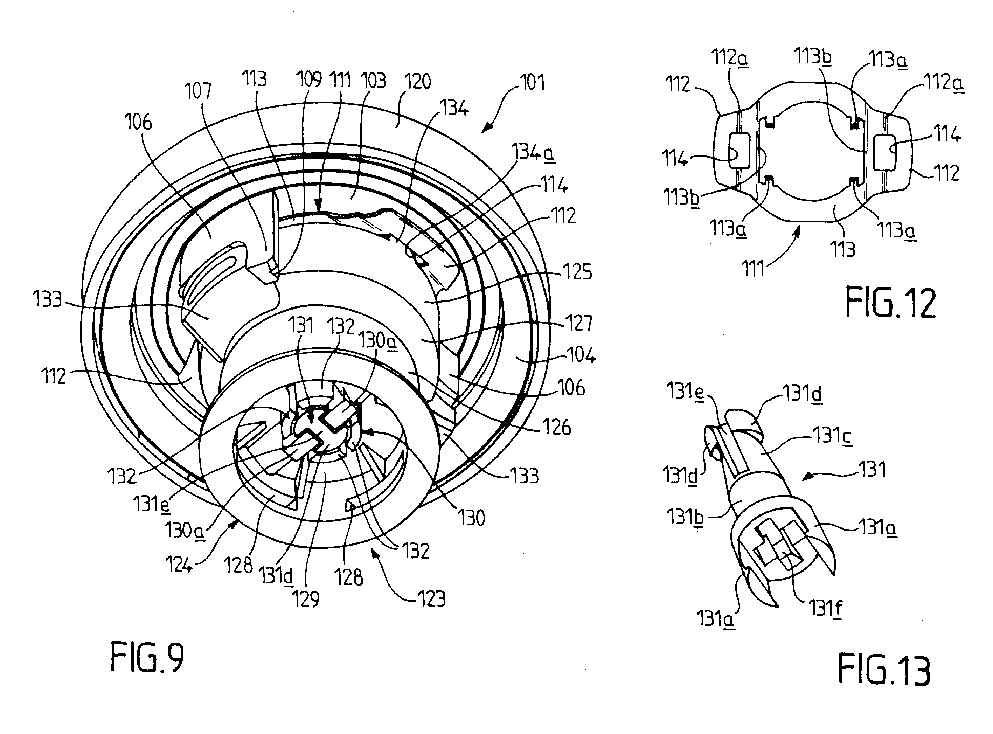

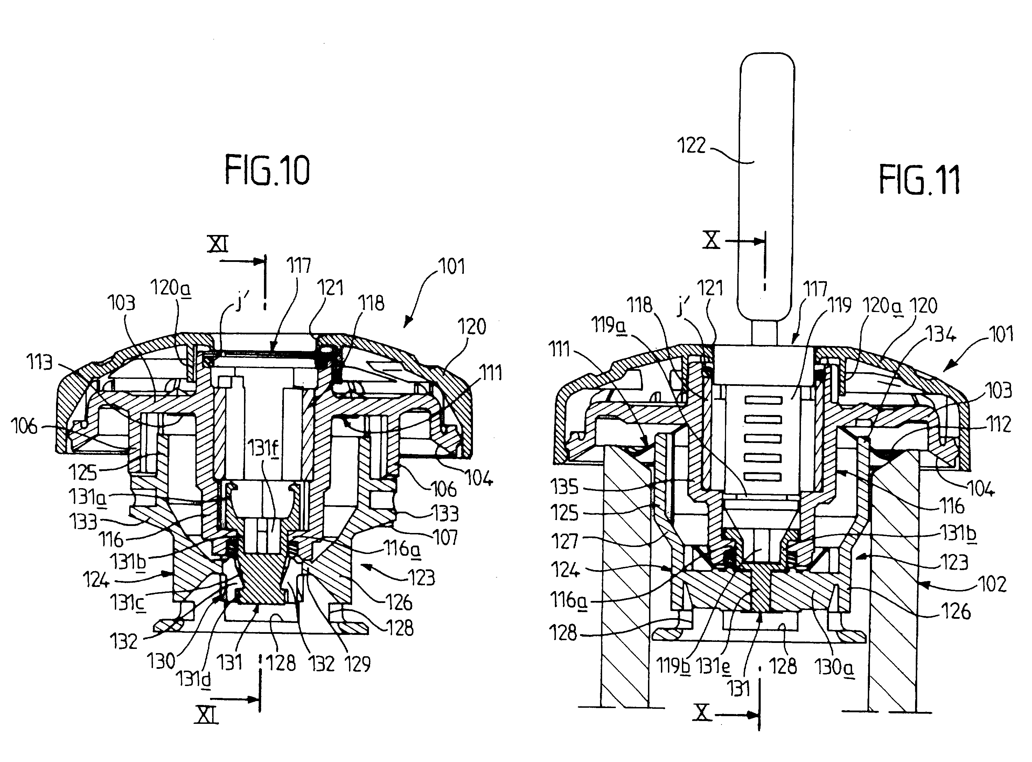

En se référant maintenant aux figures 9 à 13, on peut voir un deuxième mode de réalisation selon l'invention, comportant un bouchon 101 de tubulure 102 de réservoir de carburant pour véhicule.

Ce bouchon 101 comprend une platine 103 qui coiffe l'embouchure de la tubulure et vient comprimer, par un rebord tronconique 104, un joint d'étanchéité (non représenté) en appui contre une collerette radialement extérieure (non représentée) de la tubulure 102. Deux appendices de centrage 106, diamétralement opposés, solidaires de la platine 103 sont prévus sous sa face inférieure, en saillie vers l'intérieur de la tubulure. Lorsque le bouchon est en place sur la tubulure, ces appendices 106 coopèrent avec des moyens conjugués prévus sur la tubulure pour déterminer une position angulaire relative de la platine 103 fixe vis-à-vis de la tubulure 102. Chaque appendice 106 comporte à une extrémité une extension 107 en direction de l'intérieur de la tubulure, cette extension constituant une butée dont il sera question plus loin.

Comme visible sur la figure 9, l'appendice 106 comprend une paroi latérale constituée par une portion de paroi cylindrique d'axe confondu avec celui de la platine 103. A chaque extrémité de la paroi latérale de l'appendice 106, on peut prévoir un retour radial vers l'intérieur, tel que 109, pour guider la rotation d'un manchon cylindrique 116 sans frottement excessif.

La platine 103 comporte au centre un manchon cylindrique 116 d'axe perpendiculaire au plan moyen de la platine 103, servant de logement à un barillet 117 retenu par un jonc j' ancré dans la paroi intérieure du manchon. Le manchon 116 s'étend de part et d'autre de la platine 103. Le barillet comprend un stator 118 bloqué en rotation dans le manchon 116. Le stator 118 est donc lié en rotation à la platine 103. Un rotor 119, schématiquement représenté, est monté dans le stator, avec possibilité de rotation relativement au stator lorsque des paillettes usuelles (non visibles) sont effacées par une clé autorisée 122.

La platine 103 est recouverte par un capuchon 120 encliqueté sur le rebord 104. Le cas échéant, le capuchon 120 est monté libre de tourner relativement à la platine 103. Ce capuchon 120 comporte une ouverture centrale 121 donnant accès à une fente (non visible) du rotor 119 pour l'introduction d'une clé de commande constituée par la clé de contact 122 du véhicule, très schématiquement représentée. Cette clé 122 comporte des dents et des creux (non représentés) propres à coopérer avec les paillettes (non visibles) du rotor 119. Une jupe cylindrique 120a fait saillie du capuchon 120 vers l'intérieur et autour de l'ouverture centrale 121, pour venir s'emboîter sur la portion de manchon 116 de la platine 103 qui se trouve en vis-à-vis.

Le bouchon 101 comporte en outre un organe de maintien 123 constitué par un support 124 de baïonnettes, disposé coaxialement à la platine 103. Le support 124 comprend un manchon supérieur 125 cylindrique de révolution entourant coaxialement le manchon 116 de la platine 103 et un manchon inférieur 126, de plus faible diamètre, relié au manchon supérieur par une zone de transition tronconique 127. Des fenêtres rectangulaires 128 sont prévues en partie basse de la paroi cylindrique du manchon 126. Un voile 129, dont le plan moyen est orthogonal à l'axe de l'organe 123, est prévu dans le manchon inférieur 126, sensiblement à mi-longueur.

Ce voile 129 comporte dans sa partie centrale une sorte de moyeu 130 comportant un passage central dans lequel est bloquée en rotation un embout 131 de liaison avec le rotor 119. L'embout 131, qui est mieux représenté sur la figure 13, comporte une portion centrale cylindrique circulaire 131b qui se prolonge à une extrémité par une portion tronconique 131c dont la section transversale est en H. Les parois tronconiques opposées de la portion 131c en H comportent un épaulement radialement saillant vers l'extérieur 131d qui est destiné à s'encliqueter sur des dents 132 du moyeu 130. Les dents 132 sont formées par des fentes longitudinales ménagées à travers l'épaisseur du moyeu 130 et sont réparties sur la circonférence du moyeu 130 de façon à s'écarter élastiquement vers l'extérieur lors du passage de l'épaulement 131d à travers le moyeu 130. L'âme diamétrale 131e de la portion en H définit de part et d'autre de son plan deux logements destinés à recevoir des nervures 130a qui font saillie vers l'intérieur de manière diamétralement opposée sur la circonférence interne du moyeu 130. Les nervures 130a et les logements complémentaires de la portion en H sont destinés à bloquer en rotation relative l'embout 131 et le support 124. L'enclenchement des dents 132 contre l'épaulement 131d assure le blocage en position axiale de l'embout 131 par rapport au support 124. La portion centrale 131b de l'embout 131 traverse une ouverture prévue dans le fond 116a du manchon 116 de la platine 103. L'embout 131 peut être entraîné en rotation relativement au fond 116a et à la platine 103. Cette portion centrale 131b se prolonge à son autre extrémité par une portion cylindrique de diamètre plus grand qui appuie sur le fond 116a du manchon 116 et comporte deux pattes diamétralement opposées 131a s'étendant axialement et munies chacune d'un bec en saillie radialement vers l'intérieur pour s'encliqueter sur un épaulement 119a d'un prolongement du rotor 119. Le rotor 119 est visible sur la figure 11 alors qu'il a été omis par souci de clarté sur la figure 10. Ce prolongement du rotor 119 comporte une extrémité tronconique elle-même prolongée par une queue 119b en forme de croisillon qui est reçue dans un logement de forme complémentaire 131f prévu dans la portion cylindrique centrale 131b précitée. Ainsi, le rotor 119 est bloqué en rotation par rapport à l'embout 131 qui est lui-même lié en rotation au support 124.

Bien entendu, l'embout de liaison 131 pourrait être utilisé dans le bouchon 1 à la place de la pièce 31.

Le support 124 comporte à l'extérieur, dans la zone inférieure de son manchon 125 de plus grand diamètre, deux baïonnettes ou ergots 133 diamétralement opposés pour assurer le verrouillage du bouchon sur la tubulure. Comme visible sur la figure 9, chaque ergot 133 a une forme tubulaire à section transversale aplatie sensiblement ovale, dont le grand axe est orthogonal à l'axe géométrique du support 124 de baïonnettes.

Lorsque le bouchon 101 est verrouillé sur la tubulure 102, les ergots 133 se trouvent à 90° des appendices de centrage 106 de la platine 103 et sont retenus par une partie de la tubulure 102 constituée par un rebord (non représenté).

Pour le démontage du bouchon 101, par traction selon la direction de son axe géométrique, le support 124 de baïonnettes est tourné de 90° par rapport à sa position de verrouillage, de sorte que les ergots 133 viennent en appui contre les butées respectives 107, au-dessous des appendices de centrage 106 de la platine 103. Comme visible sur la figure 9, les ergots 133 sont compris entre les limites latérales des appendices 106, de sorte que ces ergots 133 peuvent être extraits par translation axiale à travers les créneaux ou échancrures, prévus dans le rebord de la tubulure 102, pour le passage des appendices de centrage 106.

Le bord supérieur du manchon 125 comporte deux tétons ou doigts saillants 134 diamétralement opposés et s'étendant axialement (voir figures 9 et 11), ces saillies 134 étant angulairement espacées de 90° par rapport aux baïonnettes 133, pour les raisons qui seront indiquées plus loin.

Une fine rondelle métallique élastiquement déformable 111 est montée sur le corps du manchon 116, du côté de la tubulure 102. Cette rondelle 111 comporte un corps central sensiblement annulaire plat 113 qui prend appui contre la face inférieure de la platine 103 et deux pattes diamétralement opposées 112 qui sont en extension radiale vers l'extérieur et en saillie vers la tubulure 102 dans une direction inclinée par rapport au plan de la rondelle. Au repos, les extrémités libres des pattes 112 sont donc écartées de la platine 103. Chaque patte 112 comporte un logement traversant 114 qui est destiné à recevoir dans une position donnée les tétons 134 précités. L'ouverture centrale du corps de rondelle 113 comporte deux encoches diamétralement opposées 113b s'étendant sur un secteur angulaire adjacent à une patte 112. Lorsque la rondelle 111 est emmanchée sur le manchon 116, le corps cylindrique de ce dernier traverse l'ouverture centrale du corps de rondelle 113 et des portions saillantes ou surépaisseurs 135 de forme complémentaire aux encoches 113b viennent s'ajuster dans ces dernières, pour bloquer en rotation relative la rondelle 111 par rapport au manchon 116. Chaque encoche 113b comporte une paire de languettes repliées vers le bas 113a sur deux bords opposés, lesdites languettes 113a servant comme détrompeurs au montage de la rondelle 111 sur le corps du manchon 116. Ainsi, tout risque de montage à l'envers de la rondelle 111 avec ses pattes 112 orientées vers la platine 103 est empêché par ces languettes 113a qui viendraient dans ce cas buter contre les surépaisseurs angulaires 135 du manchon 116. En outre, comme ces languettes 113a sont en appui élastique contre la surépaisseur 135 du manchon 116, tout risque de frottement entre la rondelle 111 et le manchon 116 est évité, ce qui pourrait provoquer autrement la formation de copeaux en matière plastique provenant du manchon 116. Sur la figure 12, une rainure 112a est formée à travers la patte 112 pour augmenter sa déformabilité élastique.

L'ensemble est agencé pour que les tétons 134 du support 124 viennent dans le prolongement des logements 114 de la rondelle 111, lorsque le support baïonnette 124 occupe par rapport à la platine 103, la position de démontage du bouchon illustré sur la figure 9.

Lorsque les pattes 112 sont repoussées, au niveau de leurs extrémités libres, par le bord de la tubulure 102 vers la platine 103, comme illustré sur la figure 11, les pattes 112 se rétractent et s'effacent, libérant ainsi les tétons 134 qui ne sont plus engagés dans les logements 114, le support 124 étant alors libre de tourner par rapport à la platine 103, avec le rotor 119.

Par contre, lorsque le bouchon 101 est séparé de la tubulure 102, les pattes 112 de la rondelle de blocage 111 reviennent vers le bas sous l'action de leur force de rappel élastique propre et les tétons 134 entrent à nouveau dans les logements 114, comme visible sur la figure 9.

On notera que les doigts 134 ne sont pas nécessairement à 90° des baïonnettes 133, mais doivent simplement présenter le même écartement angulaire que les pattes 112 par rapport aux appendices de centrage 106.

Le passage de la position de verrouillage du support 124 de baïonnettes, à la position permettant le démontage du bouchon, illustrée sur les figures 10 et 11, et inversement, est obtenu à l'aide de la clé de commande 122 qui permet de faire tourner le rotor 119 et avec lui le support 124 relativement à la platine 103.

De manière classique, le rotor 119 comporte des paillettes (non représentées) qui bloquent en rotation le rotor 119 relativement au stator 118 dans leur position angulaire relative permettant l'introduction et l'extraction de la clé 122. Cette position angulaire relative rotor 119/stator 118 correspond à la position angulaire de verrouillage du support baïonnette 124, pour laquelle les ergots 133 sont décalés de 90° par rapport aux appendices de centrage 106 de la platine 103.

Ceci étant, le fonctionnement du bouchon 101 de tubulure de réservoir de carburant est le suivant.

Lorsque le bouchon 101 est verrouillé sur la tubulure 102, la position angulaire du support 124 est telle que les ergots de verrouillage 133 sont tournés de 90° par rapport aux appendices de centrage 106 de la platine 103. La position angulaire relative correspondante du rotor 119 et du stator 118 permet la sortie des paillettes du rotor 119 dans le stator 118. Ceci entraîne le blocage en rotation du rotor 119 relativement au stator 118, et donc du support 124 relativement à la platine 103. Cette dernière étant bloquée en rotation sur la tubulure 102, par ses appendices 106 logés dans des échancrures du rebord de tubulure 102, et les ergots 133 étant retenus en translation axiale par le rebord de la tubulure 102, le bouchon 101 est bloqué sur la tubulure.

La sortie des paillettes du rotor 119 permet d'introduire ou d'extraire la clé 122 dans le rotor. Les pattes 112 sont déformées élastiquement vers la platine 103 par coopération avec le bord supérieur de la tubulure 102 et les doigts 134 sont hors des logements 114.

L'introduction de la clé 122 dans le rotor permet de faire rentrer les paillettes et de libérer en rotation le rotor 119 relativement au stator 118. Par action sur la clé, on peut faire tourner le rotor 119 et avec lui le support 124 de 90° par rapport à la platine 103 de sorte que les ergots de verrouillage 133 viennent en appui contre leur butée respective 107 au-dessous de l'appendice de centrage 106 respectif, chaque doigt ou téton 134 venant au droit d'un logement 114 d'une patte 112.

Du fait que le rotor 119 a tourné relativement au stator 118, les paillettes ne peuvent plus sortir du rotor et immobilisent la clé 122 dans ce dernier.

Les ergots 133 n'étant plus retenus par le rebord de la tubulure 102, le bouchon 101 peut être ôté de la tubulure par traction sur la clé 122, ou sur le bouchon 101 lui-même. Chaque patte 112 de la rondelle 111 n'étant plus en appui contre le bord de la tubulure 102, les pattes 112 sont élastiquement rappelées vers le bas et le logement 114 de chaque patte 112 s'engage sur le doigt 134 du support 124.

Le support 124 de baïonnettes et la platine 103 deviennent alors solidaires en rotation. La clé 122 ne peut plus faire tourner le support 124 pour le ramener dans la position angulaire qui permet l'extraction de la clé. Cette dernière reste donc bloquée par les paillettes du rotor 119 sur le bouchon 101 séparé de la tubulure.

Ce n'est qu'en replaçant le bouchon 101 sur la tubulure, et en le poussant contre le bord de la tubulure, que l'utilisateur peut libérer le support 124 en rotation, relativement à la platine 103, en repoussant les pattes 112 de la rondelle 111 par le bord de la tubulure. Les doigts 134 sont ainsi dégagés des logements 114. L'utilisateur peut alors faire tourner le rotor 119 et le support 124 de 90° à l'aide de la clé 122, ce qui assure le verrouillage du bouchon sur la tubulure puisque les ergots 133 reviennent sous le rebord de la tubulure 102. Ce n'est qu'à ce moment que l'utilisateur peut retirer la clé 122.

Le bouchon de l'invention permet donc d'éviter que le véhicule ne circule avec la tubulure de réservoir ouverte puisque, pour extraire cette clé 122 du rotor 119, il faut que le bouchon 101 soit en position verrouillée sur la tubulure.

Bien que l'invention ait été décrite en liaison avec deux modes de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Bouchon (1, 101) destiné a être fixé sur l'extrémité externe (2a) de la tubulure d'alimentation (2, 102) d'un réservoir de carburant de véhicule pour assurer l'obturation de ladite tubulure, ledit bouchon comportant un barillet (17, 117) de serrure ayant un stator (18, 118) fixe dans le bouchon et un rotor (19, 119) actionnable à l'aide d'une clé (22, 122), ledit rotor (19, 119) étant solidaire en rotation de moyens de verrouillage (33, 133) du bouchon (1, 101) en position d'obturation sur la tubulure (2, 102), propres à coopérer avec des moyens de blocage complémentaires (2a) prévus sur la tubulure pour empêcher le retrait du bouchon, caractérisé par le fait qu'il comprend un dispositif de blocage (11, 34, 111, 134) qui bloque la clé (22, 122) dans le rotor (19, 119) lorsque le bouchon est désolidarisé de la tubulure (2, 102), ce dispositif de blocage (11, 34, 111, 134) étant propre à s'effacer pour libérer la clé (22, 122), lorsque le bouchon (1, 101) est en position d'obturation sur la tubulure (2, 102).

2. Bouchon selon la revendication 1, caractérisé par le fait que le stator (18, 118) du barillet (17, 117) est lié en rotation à une platine (3, 103) de bouchon, le rotor (19, 119) étant lié en rotation à un organe de maintien (23, 123) pouvant tourner relativement à la platine (3, 103) lorsque le rotor (19, 119) est libéré en rotation vis à vis du stator (18, 118), la clé (22, 122) ne pouvant être introduite dans le rotor, ou retirée de ce dernier, que pour une position angulaire rotor/stator déterminée correspondant à une position angulaire organe de maintien (23, 123)/platine (3, 103) qui assure le verrouillage du bouchon (1, 101) sur la tubulure (2, 102) par coopération de l'organe de maintien (23, 123) avec un élément conjugué (2a) de la tubulure.

3. Bouchon selon la revendication 2, caractérisé par le fait que le dispositif de blocage de la clé (22, 122) comprend des moyens de blocage en rotation (11, 34, 111, 134) de l'organe de maintien (23, 123) relativement à la platine (3, 103) dans une position angulaire, qui empêche le retrait de la clé (22, 122) du rotor (19, 119) du barillet, ces moyens de blocage (11, 34, 111, 134) entrant en action lorsque le bouchon (1, 101) est retiré de la tubulure (2, 102), et étant mis hors d'action par coopération avec une partie de la tubulure lorsque le bouchon est remis en place sur celle-ci.

4. Bouchon selon la revendication 3, caractérisé par le fait que les moyens de blocage (11, 34, 111, 134) comportent au moins un organe d'enclenchement (11, 111) soumis à une sollicitation élastique (13, 112) et lié en rotation à l'un des deux éléments constitués par la platine (3, 103) et l'organe de maintien (23, 123), cet organe d'enclenchement (11, 111) étant effacé et mis hors d'action lorsque le bouchon est en prise avec la tubulure, et passant en position active qui bloque en rotation les deux éléments (3, 23, 103, 123) l'un par rapport à l'autre lorsque le bouchon est séparé de la tubulure.

5. Bouchon selon la revendication 4, caractérisé par le fait que l'organe d'enclenchement (11, 111) est lié en rotation à la platine (3, 103) et comporte une patte (12, 112) s'étendant sensiblement radialement vers l'extérieur qui est déplaçable dans une direction sensiblement parallèle à l'axe du bouchon (1, 101), la patte (12, 112) étant propre à coopérer avec le bord de l'embouchure de la tubulure (2, 102) pour repousser ladite patte à l'encontre de la sollicitation élastique (13, 112) et mettre l'organe d'enclenchement (11, 111) hors d'action lorsque le bouchon est en prise sur la tubulure.

6. Bouchon selon la revendication 4 ou 5, caractérisé par le fait que l'un (11, 123) de l'ensemble constitué par l'organe d'enclenchement (11, 111) et l'organe de maintien (23, 123) comporte au moins un doigt (14, 134) propre à s'engager, sous l'action de la sollicitation élastique (13, 112), dans un logement (34, 114) prévu sur l'autre (23, 111) dudit ensemble, pour assurer le blocage des deux éléments (3, 23, 103, 123) lorsque le bouchon est séparé de la tubulure.

7. Bouchon selon l'une des revendications 4 à 6, caractérisé par le fait que deux organes d'enclenchement (11, 111) diamétralement opposés sont prévus.

8. Bouchon selon l'une des revendications 4 à 7, caractérisé par le fait que l'organe d'enclenchement est un cliquet (11) monté mobile en translation parallèlement à l'axe du bouchon (1) et sollicité par des moyens élastiques (13).

9. Bouchon selon la revendication 8, caractérisé par le fait que le cliquet (11) comporte au moins un doigt (14) propre à s'engager, sous l'action des moyens élastiques (13), dans un logement (34) prévu sur l'organe de maintien (23), et une patte (12) s'étendant radialement vers l'extérieur pour coopérer avec le bord (2a) de l'embouchure de la tubulure (2).

10. Bouchon selon la revendication 9, caractérisé par le fait que l'organe de maintien (23) est constitué par un manchon (25, 26) faisant saillie à l'intérieur de la tubulure (2) et constituant un support (24) de baïonnettes, lequel manchon comporte au moins une baïonnette ou ergot (33) en saillie radiale propre à venir en butée, suivant une direction parallèle à l'axe du bouchon, au-dessous d'un rebord conjugué (2a) solidaire de la tubulure lorsque cet organe de maintien (23) occupe, relativement à la platine, la position de verrouillage, et le logement (34) propre à recevoir le doigt (14) du cliquet (11) est prévu dans la partie supérieure de l'ergot (33), au voisinage de la paroi du manchon (25, 26) constituant le support (24) de baïonnettes.

11. Bouchon selon la revendication 10, caractérisé par le fait que le cliquet (11), lié en rotation à la platine (3), est prévu au droit d'un appendice de centrage (6) du bouchon, solidaire de la face inférieure de la platine, cet appendice comportant une extension (7) vers l'intérieur de la tubulure propre à constituer une butée suivant la direction périphérique pour l'ergot (33) correspondant du support de baïonnettes.

12. Bouchon selon la revendication 11, caractérisé par le fait que l'appendice de centrage (6) comporte une fente (8) parallèle à l'axe géométrique du bouchon, dans laquelle peut coulisser la patte (12) du cliquet (11).

13. Bouchon selon l'une des revendications 4 à 7, caractérisé par le fait que l'organe d'enclenchement comporte une patte (112) s'étendant sensiblement radialement vers l'extérieur à partir d'une rondelle (111) en appui sur la face inférieure de la platine (103), ladite patte (112) étant élastiquement déformable à partir d'une position inclinée par rapport au plan de la rondelle pour se déplacer dans une direction sensiblement parallèle à l'axe du bouchon (101).

14. Bouchon selon la revendication 13, caractérisé par le fait que l'organe de maintien (123) comporte au moins un doigt (134) propre à s'engager, sous l'action de la force élastique de rappel de la patte (112), dans un logement (114) prévu sur ladite patte de blocage (112).

15. Bouchon selon la revendication 14, caractérisé par le fait que l'organe de maintien (123) est constitué par un manchon (125, 126) faisant saillie à l'intérieur de la tubulure (102) et constituant un support (124) de baïonnettes, lequel manchon comporte au moins une baïonnette ou ergot (133) en saillie radiale propre à venir en butée, suivant une direction parallèle à l'axe du bouchon, au-dessous d'un rebord conjugué solidaire de la tubulure (102) lorsque cet organe de maintien (123) occupe, relativement à la platine, la position de verrouillage, et le doigt (134) propre à être reçu dans le logement (114) de la patte (112) est prévu sur le bord supérieur du manchon (125) constituant le support (124) de baïonnette.

16. Bouchon selon la revendication 15, caractérisé par le fait que la patte (112) de la rondelle (111), liée en rotation à la platine (103), est angulairement espacée d'un appendice de centrage (106) du bouchon, solidaire de la face inférieure de la platine, cet appendice comportant une extension (107) vers l'intérieur de la tubulure propre à constituer une butée suivant la direction périphérique pour l'ergot (133) correspondant du support de baïonnettes.

17. Bouchon selon la revendication 16, caractérisé par le fait que la rondelle (111) est emmanchée à force sur un manchon (116) solidaire de la face inférieure de la platine (103) et contenant le barillet de serrure (117), des moyens de liaison en rotation complémentaires (113b, 135) étant formés dans la rondelle (111) et sur le manchon (116).
